# FASCICULE DE BREVET EUROPEEN

(11) **EP 3 328 593 B1**
(45) Date de publication et mention de la délivrance du brevet: **10.07.2019**
(21) Numéro de dépôt: 16757284.1
(22) Date de dépôt: 19.07.2016
(51) Int. Cl.: B25J 5/00

(54) **ROBOT COLLABORATIF SUR CHARIOT MOTORISE ASSURANT UN SOUTIEN DE L'OPERATEUR**
KOLLABORATIVER ROBOTER AUF MOTORISIERTEM WAGEN ZUR UNTERSTÜTZUNG DES BEDIENERS
COLLABORATIVE ROBOT ON MOTORISED CARRIAGE PROVIDING SUPPORT FOR THE OPERATOR

(30) Priorité: 31.07.2015 FR 1557353
(43) Date de publication de la demande: 06.06.2018
(73) Titulaire: BA Robotic Systems Group, 35310 Mordelles (FR)
(72) Inventeur: THOME, Jean-luc, 35760 Saint Gregoire (FR); CAU, Julien, 35700 Rennes (FR)
(74) Mandataire: Ermeneux, Bertrand
(86) Numéro de dépôt international: PCT/FR2016/051860
(87) Numéro de publication internationale: WO 2017/021612

(56) Documents cités:
- WO-A1-89/04893
- WO-A2-2012/107700
- DE-U1-202015 100 574
- FR-A1- 2 581 629
- US-A1- 2007 063 500

## Description

### 1. Domaine de l'invention

Le domaine de l'invention est celui de la robotique, et en particulier de la robotique collaborative.

Plus précisément, l'invention concerne un dispositif d'assistance d'un opérateur dans la manipulation d'un outil.

### 2. État de la technique

Dans un atelier industriel, il est connu de mettre à disposition d'un opérateur affecté à des travaux pénibles et/ou répétitifs un robot collaboratif, communément appelé «cobot», pour l'assister dans l'exécution de ces travaux. Un robot collaboratif permet par exemple de soulager l'utilisateur du poids d'un outil, de démultiplier un effort exercé par l'opérateur, ou de manipuler des charges lourdes et/ou brûlantes, ou des objets trop fins pour pouvoir être saisis sans difficulté par l'opérateur.

On connaît des robots collaboratifs installés sur un poste fixe.

Un robot collaboratif sur poste fixe ne permet pas cependant de travailler sur des pièces de taille importante. Par ailleurs, il faut prévoir des moyens de manutention pour transporter les pièces sur lequel l'opérateur doit intervenir, jusqu'au poste fixe.

Afin de remédier à ces inconvénients, on a proposé de monter un cobot sur un support équipé de roues comme le montre le document US-A1-2007/0063500, ou de le suspendre à un pont roulant comme le montre le document DE-U1-20 2015 100 574, pour pouvoir le déplacer entre différentes zones de travail.

Un inconvénient de ces techniques connues est que l'opérateur doit interrompre sa tâche lorsqu'il a besoin de déplacer le cobot. Cette contrainte s'avère particulièrement pénalisante pour un soudeur, qui ne peut donc pas réaliser un cordon de soudure de grande longueur sans effectuer de reprise.

D'autre part, l'utilisation d'un pont roulant impose de disposer d'un atelier avec une hauteur sous plafond suffisante. En outre, un pont roulant est onéreux et nécessite de réaliser des travaux importants pour modifier le parcours du cobot.

Par ailleurs, on constate que sur la plupart des postes équipés d'un robot collaboratif connu, un opérateur fatigue en restant debout à côté du robot collaboratif et peut développer une lombalgie.

### 3. Objectifs de l'invention

L'invention a donc notamment pour objectif de pallier les inconvénients de l'état de la technique cités ci-dessus.

Plus précisément l'invention a pour objectif de fournir une technique d'assistance d'un opérateur dans la manipulation d'un outil qui permette de limiter la fatigue de l'opérateur.

Un objectif de l'invention est également de fournir une telle technique qui limite l'apparition de contractions musculaires, statiques et/ou dynamiques.

Un autre objectif de l'invention est de fournir une technique d'assistance qui permette à l'opérateur d'éviter d'adopter des postures forcées et/ou extrêmes.

Encore un objectif de l'invention est de proposer une telle technique qui limite les risques bio-mécaniques et donc les troubles musculo-squelettiques (également connu sous l'acronyme « TMS »).

Un objectif de l'invention est également de fournir une technique d'assistance d'un opérateur dans la manipulation d'un outil qui permette d'intervenir sur différentes parties d'une pièce ou d'une structure éloignées de plusieurs mètres.

Un autre objectif de l'invention est de proposer une technique d'assistance d'un opérateur dans la manipulation d'un outil qui permette à l'opérateur de travailler en continu.

L'invention a également pour objectif de fournir une telle technique d'assistance qui soit peu encombrante.

Encore un objectif de l'invention est de fournir une technique d'assistance qui soit légère.

Un autre objectif de l'invention est de proposer une technique d'assistance qui soit simple à mettre en oeuvre.

### 4. Exposé de l'invention

Ces objectifs, ainsi que d'autres qui apparaîtront par la suite sont atteints à l'aide d'un dispositif d'assistance d'un opérateur dans la manipulation d'un outil, comprenant un bras de manipulation robotisé dudit outil monté sur un chariot motorisé, tel que défini dans la revendication 1.

Dans le cadre de l'invention, l'outil monté sur le bras de manipulation robotisé peut être, par exemple, un outil dédié de soudure, de perçage, de ponçage, de bouchardage ou de fraisage. Il peut également s'agir d'une pince, d'un doigt ou d'un crochet, permettant de déplacer une charge lourde et/ou encombrante, ou de réaliser un assemblage. L'outil peut par ailleurs être monté sur un porte-outil équipant l'extrémité libre du bras robotisé.

Selon l'invention, un tel dispositif d'assistance comprend des moyens de pilotage automatique du déplacement dudit chariot motorisé en fonction des mouvements du tronc et/ou des membres inférieurs de l'opérateur et/ou en fonction d'une consigne de déplacement prédéterminée et présente des moyens de soutien dudit opérateur comprenant un harnais apte à enserrer au moins une portion du tronc dudit opérateur, de préférence une portion du bassin et/ou de la ceinture pelvienne dudit opérateur, et des moyens de solidarisation dudit harnais au bâti dudit chariot motorisé.

Ainsi, de façon inédite, l'invention propose de placer un bras de manipulation robotisé sur un chariot motorisé, pour permettre au bras robotisé de suivre automatiquement l'opérateur dans ses déplacements et/ou de se déplacer en suivant une consigne de déplacement prédéterminée.

La mise en oeuvre d'un chariot motorisé permet en outre avantageusement de transporter le bras de manipulation robotisé sur un sol en pente et/ou accidenté et d'intervenir en extérieur.

Par ailleurs, grâce au soutien assuré par le dispositif d'assistance, on limite la fatigue de l'opérateur, dont les jambes sont au moins partiellement soulagées du poids du corps grâce au harnais, et on peut prévenir une chute de l'opérateur, s'il glisse sur le sol ou trébuche sur un obstacle.

Dans un mode de réalisation particulier de l'invention, ledit chariot motorisé est un chariot à guidage automatique, aussi désigné sous l'acronyme agv, pour « automated guided vehicle » en anglais.

La mise en oeuvre d'un chariot motorisé à guidage automatique permet ainsi de déplacer le bras de manipulation sur un parcours prédéfini selon une vitesse de progression préétablie en fonction de ladite consigne de déplacement.

Dans un mode de réalisation particulier de l'invention, un dispositif d'assistance tel que décrit ci-dessus comprend :
- au moins un capteur de mesure de la position et/ou du déplacement d'une portion du tronc de l'opérateur, par exemple du buste, du bassin ou d'une épaule, ou d'une zone des membres inférieurs de l'opérateur ;
- un contrôleur temps réel embarqué sur ledit chariot motorisé, apte à piloter le déplacement dudit chariot motorisé en réponse à un mouvement dudit opérateur à partir des mesures fournies par ledit capteur de mesure de la position et/ou du déplacement d'une portion du tronc ou d'une zone des membres inférieurs de l'opérateur.

Ainsi, le dispositif d'assistance peut suivre l'opérateur au moindre déplacement de ce dernier.

Selon un aspect particulier de l'invention, ledit capteur de mesure appartient au groupe comprenant :
- gyroscope à trois degrés de liberté de rotation ;
- capteur de force ;
- dispositif de mesure optique.

Dans un mode de réalisation particulier de l'invention, ledit capteur de mesure est un capteur permettant de détecter un mouvement d'au moins un pied dudit opérateur et ledit contrôleur temps réel embarqué est apte à commander la rotation d'au moins une roue motrice dudit chariot motorisé, de façon à ce que ledit chariot se déplace au sol en suivant le déplacement dudit opérateur.

Dans un mode de réalisation particulier de l'invention, lesdits moyens de solidarisation comprennent un premier câble solidarisé à une première portion dudit harnais et un deuxième câble solidarisé à une deuxième portion dudit harnais, distincte de ladite première portion.

La mise en oeuvre de deux câbles pour suspendre le harnais s'avère une solution particulièrement simple et peu onéreuse. Elle permet par ailleurs de garantir une stabilité convenable de l'opérateur.

Selon un aspect particulier de l'invention, un tel dispositif d'assistance comprend des moyens d'actionnement de chacun desdits câbles de manière indépendante.

Il est ainsi possible d'effectuer un réglage précis de la hauteur et de l'inclinaison du harnais.

Dans un mode de réalisation particulier de l'invention, un dispositif d'assistance tel que décrit ci-dessus comprend des moyens de surveillance de la posture dudit opérateur aptes à détecter lorsque ladite posture dudit opérateur s'écarte d'une posture de référence prédéfinie et des moyens de commande desdits moyens d'actionnement desdits câbles en fonction de l'écart de ladite posture détectée par rapport à ladite posture de référence prédéfinie.

On peut ainsi corriger la posture de l'opérateur, si celle-ci s'écarte d'une posture confortable de référence dans laquelle le buste de l'opérateur est droit.

Dans un mode de réalisation particulier de l'invention, lesdits moyens de solidarisation du harnais au bâti du chariot comprennent un support déformable monté mobile par rapport au bâti dudit chariot motorisé, comprenant au moins un bras omnidirectionnel.

On peut ainsi adapter le niveau de soutien de l'opérateur en faisant varier la position verticale du support déformable mobile et redresser l'opérateur lorsqu'il penche sur un côté, vers l'avant ou vers l'arrière, en agissant sur le ou les bras omnidirectionnels.

Selon un aspect particulier de l'invention, lesdits moyens de soutien de l'opérateur comprennent un dispositif de soutien d'un bras dudit opérateur.

Ce dispositif de soutien du bras de l'opérateur peut par exemple être une écharpe ou un accoudoir, permettant de soulager le bras de l'opérateur.

Dans un mode de réalisation particulier de l'invention, un dispositif d'assistance tel que décrit ci-dessus comprend des moyens de détermination des composantes du torseur des efforts d'interaction entre ledit opérateur et ledit outil et des moyens d'asservissement cinématique dudit bras de manipulation et/ou dudit chariot motorisé destinés à minimiser le torseur des efforts d'interaction entre ledit opérateur et ledit outil.

Ainsi, le dispositif d'assistance permet de réduire les efforts à fournir par l'opérateur. L'opérateur ainsi assisté est alors moins sollicité, ce qui réduit sa fatigue, augmente sa production et limite les risques de troubles musculo-squelettiques.

Selon un mode de réalisation particulier de l'invention, lesdits moyens de détermination des composantes du torseur des efforts d'interaction entre ledit opérateur et ledit outil comprennent des moyens de mesure d'au moins une composante du moment des forces et/ou de la résultante des forces s'exerçant sur au moins une articulation dudit bras de manipulation et/ou sur une poignée de préhension fixée audit bras.

Lesdits moyens de mesure d'au moins une composante du moment des forces et/ou de la résultante des forces peuvent en particulier comprendre un ou plusieurs capteurs de force et/ou un ou plusieurs capteurs de couple.

Selon un aspect particulier de l'invention, ledit bras de manipulation comprend une première et une deuxième sections solidarisées via une première articulation et une troisième section solidarisée à ladite deuxième section via une deuxième articulation, ladite première section étant en outre solidarisé au châssis dudit chariot motorisé par une troisième articulation, chacune desdites première, deuxième et troisième articulations étant commandée par lesdits moyens d'asservissement.

Ainsi, le bras s'adapte aux caractéristiques morphologiques de son utilisateur pour lui permettre de travailler dans une posture confortable.

Selon un aspect particulier de l'invention, lesdits moyens d'asservissement sont aptes à commander la position du bras de manipulation et/ou la position du chariot motorisé par rapport à la position dudit outil ou de l'extrémité distale du bras de manipulation.

Ainsi, le dispositif d'assistance peut suivre le moindre mouvement imposé par l'opérateur à l'outil.

### 5. Liste des figures

D'autres caractéristiques et avantages de l'invention apparaîtront plus clairement à la lecture de la description suivante de trois modes de réalisation de l'invention, donnés à titre de simples exemples illustratifs et non limitatifs, et des dessins annexés parmi lesquels :
- la figure 1 représente une vue d'ensemble d'un exemple de mode de réalisation d'un dispositif d'assistance d'un opérateur dans la manipulation d'un outil selon l'invention ;
- la figure 2 est une vue de détail de la partie supérieure du bâti du dispositif d'assistance présenté en référence à la figure 1 ;
- la figure 3 est une vue d'ensemble d'un autre exemple de mode de réalisation d'un dispositif d'assistance selon l'invention ;
- la figure 4 est une vue de détail de la partie supérieure du châssis du dispositif d'assistance présenté en référence à la figure 3.
- la figure 5 est une vue d'ensemble d'un troisième exemple de mode de réalisation d'un dispositif d'assistance selon l'invention.

### 6. Description détaillée de l'invention

### 6.1. Exemple d'un mode de réalisation de l'invention

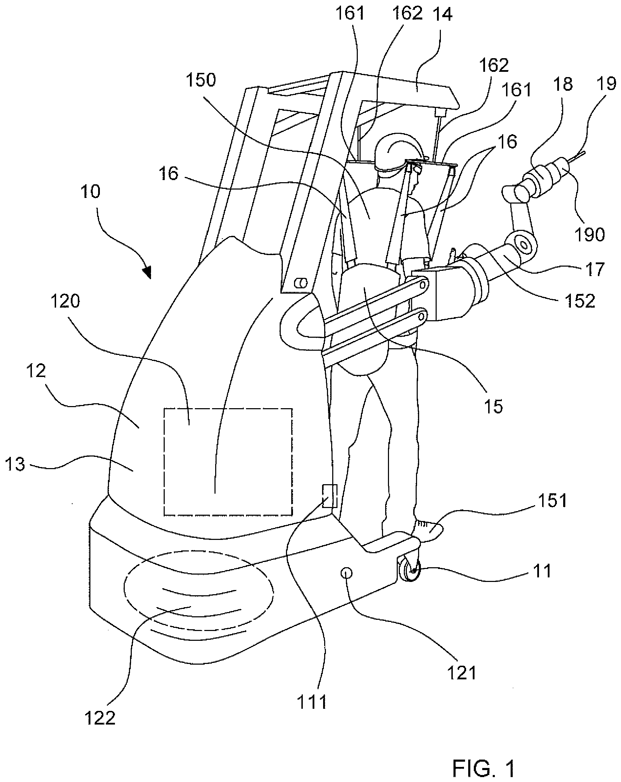

On a illustré sur la figure 1 un exemple de mode de réalisation d'un dispositif 10 selon l'invention assistant un soudeur 150 à réaliser un cordon de soudure TIG (acronyme de "Tungsten Inert Gas" en anglais) continu entre deux pièces métalliques de grande taille.

Ce dispositif d'assistance 10 comprend un bras de manipulation robotisé 17 connu en soi présentant à son extrémité un porte-outil sur lequel est montée une torche TIG automatique 19 reliée à un poste à souder 190.

Le soudeur 150 actionne ce bras 17 à l'aide d'une poignée ergonomique fixée à la base du bras 17, équipée de capteurs de force multiaxes mesurant la direction et de l'intensité des efforts exercés sur la poignée par la main droite 152 du soudeur 150, de façon à commander le bras 17. Un accoudoir (non représenté sur la figure 1) est par ailleurs formé sur le côté interne du bras de manipulation robotisé 17 pour soutenir l'avant-bras droit du soudeur 150 lorsqu'il manipule le bras robotisé 17.

Le bras robotisé 17 est monté sur un chariot motorisé 12 dont les déplacements sont pilotés automatiquement via un contrôleur temps réel embarqué (non représenté sur la figure 1), équipé de trois roues motrices 11, placé derrière le soudeur 150. Ce chariot 12 permet au bras robotisé 17 de suivre automatiquement le soudeur 150 dans ces déplacements vers l'avant, vers l'arrière ou sur un côté, grâce à une caméra qui détecte les mouvements des pieds de l'opérateur et permet de mesure leur amplitude. Ainsi, lorsque le soudeur 150 fait un pas dans une direction pour poursuivre son cordon de soudure, le chariot transporte consécutivement le bras robotisé 17 dans cette même direction sur une distance égale à celle du pas réalisé par le soudeur 150.

Le bâti 13 du chariot autoguidé 12 est surmonté par un portique 14 auquel est suspendu un harnais-culotte 15, enserrant le bassin du soudeur 150, qui permet de partiellement soulager les jambes du soudeur du poids de son corps.

De chaque côté du harnais, deux bretelles 16 sont accrochées à un balancier 161 suspendue à un filin 162, qui permet d'écarter ces bretelles, afin de ne pas contraindre les mouvements du torse du soudeur 150.

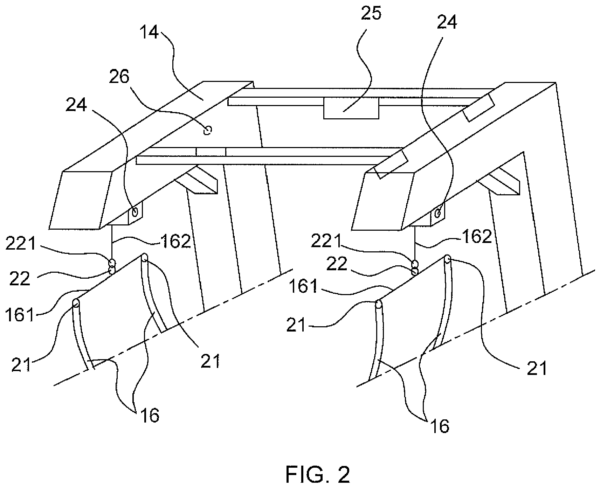

Comme on peut le voir plus en détail dans une vue en perspective de la partie supérieure du chariot 12 illustrée en figure 2, des anneaux 21 sont prévus aux extrémités des balanciers 161 pour passer l'extrémité des bretelles 16.

Chaque balancier 161 présente par ailleurs un anneau central 22, accroché à un des filins 162 par l'intermédiaire d'un mousqueton 221.

Les filins 162 sont enroulés chacun sur un treuil 24 fixé au portique 14, permettant de contrôler la longueur déroulée des filins 162. Il est ainsi possible de régler précisément la hauteur et l'inclinaison latérale du harnais 15.

Dans une autre variante de ce mode de réalisation particulier de l'invention, il peut être envisagé de suspendre les bretelles 16 du harnais 15 à deux anneaux.

Dans une autre variante de ce mode de réalisation particulier de l'invention, il peut être prévu de suspendre le harnais à deux filins déroulés chacun à partir de treuils indépendants, de façon à régler l'inclinaison du harnais 15 latéralement et longitudinalement.

Un capteur optique tridimensionnel 25, monté au centre du portique 14, et un inclinomètre 26 destiné à mesurer l'inclinaison du sol, permettent de surveiller la posture du soudeur 150 par rapport à une posture de référence dans laquelle le buste de l'opérateur est vertical.

Lorsqu'un écart de posture, corrigé de l'inclinaison du sol, est détecté sur les images du capteur 25 par un microcontrôleur assurant le traitement de ces images, celui-ci transmet des instructions de commande aux actionneurs des treuils 24 et, le cas échéant, aux actionneurs de roue du chariot 12 pour déplacer légèrement le chariot 12 et repositionner le soudeur 150 dans la posture de référence.

Dans une variante de ce mode de réalisation particulier de l'invention, il peut être prévu de surveiller la posture du soudeur 150 via des capteurs de force montés sur les bretelles 16 du harnais 15, ou via un gyroscope à trois degrés de liberté de rotation monté sur le harnais 15.

Des batteries Li-ion 120 à haut rendement alimentent le chariot motorisé 12 et le bras robotisé 17 en électricité. Un connecteur 121 monté sur le côté du chariot 12 permet de recharger les batteries 120.

Par ailleurs, afin d'empêcher le chariot 12 de basculer sous l'effet du poids du bras robotisé 17 et du poste à souder 190, un contrepoids 122 est prévu sous les batteries 120, dans la partie basse du chariot 12.

### 6.2. Deuxième exemple de mode de réalisation de l'invention

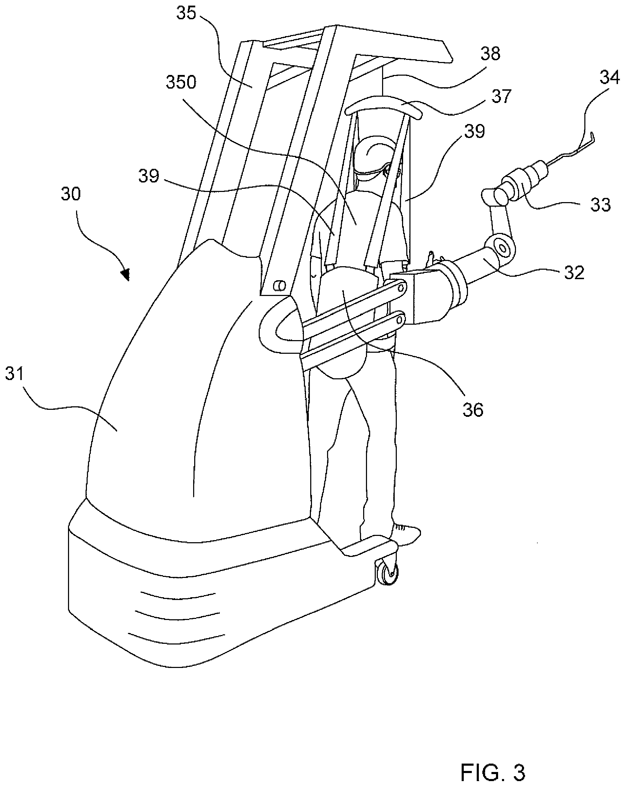

On a représenté sur la figure 3 une vue en perspective d'un autre exemple de dispositif d'assistance 30 selon l'invention, destiné à assister un opérateur 350 à déplacer une charge lourde.

Ce dispositif d'assistance 30 est constitué d'un chariot motorisé à guidage automatique 31 sur lequel est monté un bras de manipulation robotisé 32, présentant à son extrémité un porte-outil 33 maintenant un crochet de manutention 34.

Dans ce mode de réalisation particulier de l'invention, les deux bretelles 39 du harnais 36 enserrant le bassin de l'opérateur 350 sont accrochées sur une potence déformable 37 suspendue à un filin 38.

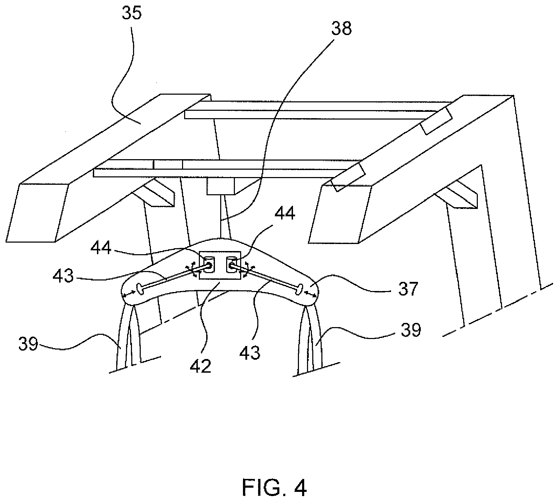

Comme on peut le voir de manière plus détaillée sur la figure 4, la potence déformable 37 est formée d'une plateforme 42 portant deux bras télescopiques indépendants omnidirectionnels 43 et de préférence à déplacement holonomique, actionnés chacun par un moteur distinct 44.

Chacune des bretelles 39 est fixée à un des bras 43. Ainsi en actionnant un des deux moteurs 44, il est possible de régler l'inclinaison latérale et/ou la hauteur du harnais 36 et d'agir sur la posture de l'opérateur.

### 6.3. Troisième exemple de mode de réalisation de l'invention

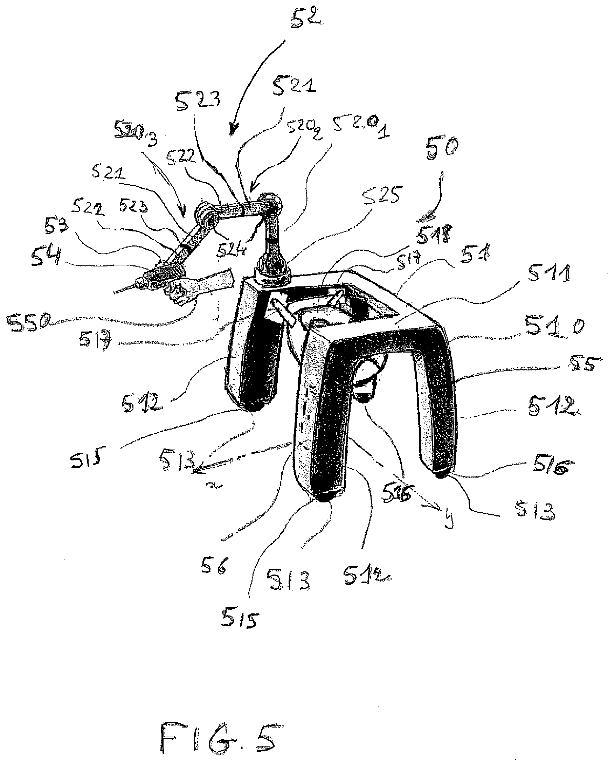

On a illustré sur la figure 5 une vue en perspective d'un autre exemple d'un dispositif d'assistance 50 selon l'invention, destiné à aider un opérateur 550 à manipuler une perceuse 54. Par souci de lisibilité, seule la main de l'opérateur 550 est représentée sur la figure 5.

Le dispositif d'assistance 50 est formé d'un chariot motorisé 51 sur lequel est monté un bras de manipulation robotisé 52, qui présente à son extrémité libre un porte-outil 53 auquel est fixée la perceuse 54. Le dispositif d'assistance 50 comprend en outre un module d'asservissement 55 de la position du bras 52 et/ou du chariot motorisé 51 par rapport à la position du tronc de l'opérateur 550.

Le châssis 510 du chariot motorisé 51 présente un support 511, en forme de U, monté sur quatre pieds 512. Chaque pied 512 est équipé à son extrémité distale d'une roue 513, pour former un quadrilatère de sustentation du chariot 51. Deux de ces roues 513 sont des roues motrices et directrices 515 commandées par un module d'asservissement 55, les autres roues étant deux roues folles 516, ce qui permet au chariot motorisé 51 d'évoluer dans le plan sensiblement horizontal selon les axes X et Y. Avantageusement, les deux roues folles 516 forment deux sommets consécutifs du quadrilatère de sustentation. Le chariot motorisé comprend en outre une batterie 56 d'alimentation de l'électronique et des organes électrotechniques du dispositif d'assistance 50, tels les moteurs d'entraînement des roues motrices et directrices 515.

Sur la figure 5, on peut voir qu'un harnais-culotte 518 est suspendu par des bretelles 517 au support 511. Ce harnais 518 permet à l'opérateur de travailler en position assise pour soulager ses jambes et diminuer sa fatigue. Il est en outre équipé d'une centrale inertielle qui mesure la vitesse de déplacement et l'accélération de l'opérateur 550, reliée par un port de communication avec le module d'asservissement 55.

Le support en U 511 porte également le bras de manipulation 52. Ce dernier est monté à l'extrémité droite du U pour permettre à l'opérateur 550 de manipuler la perceuse 54 de la main droite. Ce bras 52 est articulé par rapport au châssis 510 du chariot motorisé 51 au moyen d'une troisième articulation 525, de type rotule à doigt, qui autorise une rotation selon deux axes.

Le bras 52 est formé de trois sections 520₁, 520₂ et 520₃. Chaque section 520₁, 520₂ et 520₃ est formée de deux parties 521, 522 articulées entre elles au moyen d'une articulation de type pivot 523, dont l'axe de rotation est coaxial avec l'axe longitudinal de la section 520.

Une extrémité de la première section 520₁, encore appelée par la suite arrière-bras, est fixée à l'articulation 525. La seconde extrémité de l'arrière-bras 520₁ est reliée par une première articulation 524 à une extrémité d'une deuxième section 520₂, encore appelée section intermédiaire. L'autre extrémité de la section intermédiaire 520₂ est fixée à une deuxième articulation 524. Cette articulation 524 permet d'articuler entre elles la section intermédiaire 520₂ et une troisième section 520₃, encore appelée par la suite avant-bras. Les articulations 523 et 524 permettent respectivement une rotation selon un axe perpendiculaire à l'axe longitudinal des sections 520₁ et 520₂ ou 520₂ et 520₃ auxquelles il est solidarisé.

À l'extrémité distale de l'avant-bras 520₃, le porte-outil 53 est articulé et autorise une rotation selon au moins un axe, avantageusement deux ou trois axes. Ainsi l'opérateur peut aisément orienter la perceuse 54 selon l'axe de perçage souhaité pour effectuer un perçage.

Chaque articulation 523, 524, 525 est actionnée par un ou plusieurs moteurs équipés d'un capteur de couple mesurant l'intensité du couple produit par chaque moteur (non représenté sur la figure 5). Ces articulations 523, 524, 525 sont également équipées chacune d'un capteur de position mesurant respectivement la position angulaire de la section 520₁ par rapport au châssis 510, l'écart angulaire entre la section 520₁ et 520₂ et l'écart angulaire entre la section 520₂ et la section 520₃. Le module d'asservissement 55 calcule alors à partir de ces mesures et des données géométriques du bras (longueurs des sections 520₁, 520₂ et 520₃ et orientation des axes de rotation des articulations) le vecteur force et le vecteur moment du torseur d'interaction entre l'opérateur et le bras de manipulation 52 au point de préhension de l'outil 54 par l'opérateur 550 ou au niveau du porte-outil 53.

Dans ce mode de réalisation particulier de l'invention, chacun des capteurs de couple est du type à effet Hall. Dans des variantes de ce mode de réalisation particulier de l'invention, il peut être prévu qu'au moins un des capteurs de couple soit une jauge de contrainte ou un potentiomètre rotatif ou soit remplacé par une mesure de l'intensité électrique consommée par le moteur de l'articulation où est implanté le capteur de couple, permettant indirectement au module d'asservissement 55 d'estimer la valeur du couple exercé par le moteur.

Le dispositif d'assistance 50 est configuré pour permettre à l'opérateur 550 de travailler dans une zone dite de confort adaptée à ses caractéristiques morphologiques propres. Cette zone de confort correspond à une posture équilibrée qui limite les efforts excessifs à exercer sur l'outil de perçage. Lorsque le module d'asservissement 55 détecte un mouvement de la perceuse 54, il calcule le torseur des efforts d'interaction entre l'opérateur 550 et la perceuse 54 et applique un algorithme connu en soi visant à minimiser le torseur des efforts d'interaction en agissant sur la position des segments 520 du bras 52 et/ou sur la position du chariot motorisé 51 en fonction de l'amplitude du déplacement effectué par la perceuse 54.

Pour cela, le microcontrôleur qui équipe la carte électronique du module d'asservissement 55 reçoit les signaux électriques de sortie des capteurs de couple et des capteurs de position et calcule en temps réel les corrections à apporter à la position du chariot motorisé 51 et/ou du bras 52, transmises aux moteurs des articulations 523, 524, 525 du bras 52 et/ou aux moteurs des roues du chariot motorisé 51.

Pour illustrer le fonctionnement, lorsque l'opérateur 550 pousse sur la perceuse et que celle-ci sort de la zone de confort, le module d'asservissement 55 calcule l'écart entre la position réelle de la perceuse et la zone de confort dans laquelle la perceuse devrait se situer par rapport à l'opérateur.

Si cet écart est faible, c'est-à-dire inférieur à 10 cm autour de la zone de confort, le module d'asservissement 55 corrige la position du bras en commandant l'actionnement les moteurs des articulations 523, 524 et/ou 525.

Si l'écart est important, c'est-à-dire supérieur à 10 cm, le module d'asservissement 55 émet des instructions de commande des moteurs des roues 513 pour rapprocher le châssis du chariot motorisé 51 de la perceuse 54 et émet également des instructions de commande des moteurs des articulations 523, 524 et/ou 525 pour replier le bras 52.

Ainsi, le dispositif d'assistance 50 permet de limiter les efforts exercés par l'opérateur 550, lors de l'utilisation de la perceuse 54, et notamment pendant les phases de déplacement de l'outil vers une nouvelle position de perçage et pendant les phases de perçage. En particulier, l'opérateur 550 n'a pas à supporter le poids de l'outil. Le dispositif d'assistance 50 évite ainsi que l'opérateur adopte une posture inconfortable ou fatigante, voire susceptible d'occasionner des blessures ou des troubles musculo-squelettiques.

Dans une variante de ce mode de réalisation de l'invention, il peut être prévu que le porte-outil soit équipé d'une poignée de préhension, fixe ou pouvant pivoter sur 2 ou 3 axes, permettant de diriger l'outil et équipée de capteurs de force et/ou de capteurs de couple et que le torseur des efforts d'interaction soit calculé par le module d'asservissement à partir des mesures des forces et/ou des couples exercés sur la poignée.

### 6.4. Autres caractéristiques optionnelles et avantages de l'invention

Dans une variante des modes de réalisation de l'invention détaillés ci-dessus, il peut être envisagé que le dispositif d'assistance comprenne une orthèse configurée pour s'adapter au bras de l'opérateur, équipée de capteurs de force, permettant de commander le mouvement du bras robotisé. qui va reproduire les mouvements du bras de l'opérateur détectés à l'aide de l'orthèse, en démultipliant les efforts réalisés. L'opérateur peut ainsi actionner le bras robotisé avec facilité lorsqu'il se trouve dans une position inconfortable.

Dans d'autres variantes de l'invention, il peut aussi prévu que :
- chaque pied du chariot motorisé soit équipé à son extrémité distale d'une roue motrice et directrice commandée par le module d'asservissement, afin de rendre le chariot motorisé omnidirectionnel ;
- au moins une roue du chariot motorisé soit une roue du type mecanum (marque déposée) ;
- le bras de manipulation soit un bras robotisé à 6 degrés de liberté, par exemple du type UR5 de la société Universal Robotics (marque déposée) ou un bras robotisé à 7 degrés de liberté, par exemple du type Iiwa de la société Kuka (marque déposée) ;
- le bras de manipulation soit équipé d'un porte-outil à changement rapide d'outils, de façon à pouvoir procéder au changement de l'outil en quelques secondes au niveau de l'extrémité libre du bras de manipulation ;
- le dispositif d'assistance comprenne un accoudoir fixé au bras 52 ou sur le chariot motorisé 53 ;
- le bras soit monté sur l'extrémité gauche du support en U 511 pour une utilisation par l'opérateur de l'outil avec sa main gauche ;
- chaque extrémité du support 511 en U porte un bras équipé d'un outil spécifique ;
- le chariot motorisé soit équipé d'un LIDAR et d'une unité de traitement des mesures réalisées par LIDAR, qui détermine la position et la direction de déplacement du chariot motorisé à tout instant par un algorithme dit de SLAM (acronyme de Cartographie et Localisation Simultanées en anglais) de façon à limiter les déplacements du chariot motorisé dans une zone de travail autorisée et ainsi prévenir un risque d'accident.

## Revendications

1. Dispositif d'assistance d'un opérateur dans la manipulation d'un outil, comprenant un bras de manipulation robotisé dudit outil monté sur un chariot motorisé, ledit dispositif comprenant des moyens de pilotage automatique du déplacement dudit chariot motorisé en fonction des mouvements du tronc et/ou des membres inférieurs de l'opérateur et/ou en fonction d'une consigne de déplacement prédéterminée et en ce qu'il présente des moyens de soutien dudit opérateur comprenant un harnais apte à enserrer au moins une portion du tronc dudit opérateur, de préférence une portion du bassin et/ou de la ceinture pelvienne dudit opérateur, et des moyens de solidarisation dudit harnais au bâti dudit chariot motorisé.

2. Dispositif d'assistance selon la revendication 1, **caractérisé en ce qu'**il
- au moins un capteur de mesure de la position et/ou du déplacement d'une portion du tronc de l'opérateur, par exemple du buste, du bassin ou d'une épaule, ou d'une zone des membres inférieurs de l'opérateur ;
- un contrôleur temps réel embarqué sur ledit chariot motorisé, apte à piloter le déplacement dudit chariot motorisé en réponse à un mouvement dudit opérateur à partir des mesures fournies par ledit capteur de mesure de la position et/ou du déplacement d'une portion du tronc ou d'une zone des membres inférieurs de l'opérateur.

3. Dispositif d'assistance selon la revendication 2, **caractérisé en ce que** ledit capteur de mesure appartient au groupe comprenant au moins :
- gyroscope à trois degrés de liberté de rotation ;
- capteur de force ;
- dispositif de mesure optique.

4. Dispositif d'assistance selon l'une quelconque des revendications 2 et 3, **caractérisé en ce que** ledit capteur de mesure est un capteur permettant de détecter un mouvement d'au moins un pied dudit opérateur et ledit contrôleur temps réel embarqué est apte à commander la rotation d'au moins une roue motrice dudit chariot motorisé, de façon à ce que ledit chariot se déplace au sol en suivant le déplacement dudit opérateur.

5. Dispositif d'assistance selon l'une quelconque des revendications 1 à 4, **caractérisé en ce que** lesdits moyens de solidarisation comprennent un premier câble solidarisé à une première portion dudit harnais et un deuxième câble solidarisé à une deuxième portion dudit harnais, distincte de ladite première portion.

6. Dispositif d'assistance selon la revendication 5, **caractérisé en ce qu'**il comprend des moyens d'actionnement de chacun desdits câbles de manière indépendante.

7. Dispositif d'assistance selon la revendication 6, **caractérisé en ce qu'**il comprend des moyens de surveillance de la posture dudit opérateur aptes à détecter lorsque ladite posture dudit opérateur s'écarte d'une posture de référence prédéfinie et des moyens de commande desdits moyens d'actionnement desdits câbles en fonction de l'écart de ladite posture détectée par rapport à ladite posture de référence prédéfini.

8. Dispositif d'assistance selon l'une quelconque des revendications 1 à 9, **caractérisé en ce que** lesdits moyens de soutien comprennent un dispositif de soutien d'un bras dudit opérateur.

9. Dispositif d'assistance selon l'une quelconque des revendications 1 à 8, **caractérisé en ce qu'**il comprend des moyens de détermination des composantes du torseur des efforts d'interaction entre ledit opérateur et ledit outil et des moyens d'asservissement cinématique dudit bras de manipulation et/ou dudit chariot motorisé destinés à minimiser le torseur des efforts d'interaction entre ledit opérateur et ledit outil.

10. Dispositif d'assistance selon la revendication 9, **caractérisé en ce que** lesdits moyens de détermination des composantes du torseur des efforts d'interaction entre ledit opérateur et ledit outil comprennent des moyens de mesure d'au moins une composante du moment des forces et/ou de la résultante des forces s'exerçant sur au moins une articulation dudit bras de manipulation et/ou sur une poignée de préhension fixée audit bras.

11. Dispositif d'assistance selon l'une quelconque des revendications 9 et 10, **caractérisé en ce que** ledit bras de manipulation comprend une première et une deuxième sections solidarisées via une première articulation et une troisième section solidarisée à ladite deuxième section via une deuxième articulation, ladite première section étant en outre solidarisé au châssis dudit chariot motorisé par une troisième articulation, chacune desdites première, deuxième et troisième articulations étant commandée par lesdits moyens d'asservissement.

12. Dispositif d'assistance selon l'une quelconque des revendications 9 à 11, **caractérisé en ce que** lesdits moyens d'asservissement sont aptes à commander la position du bras de manipulation et/ou la position du chariot motorisé par rapport à la position dudit outil ou de l'extrémité distale du bras de manipulation.

## Patentansprüche

1. Vorrichtung zur Unterstützung einer Bedienungsperson bei der Handhabung eines Werkzeugs, umfassend einen Roboterhandhabungsarm des Werkzeugs, der auf einem motorisierten Wagen befestigt ist, wobei die Vorrichtung Mittel zum automatischen Steuern der Bewegung des motorisierten Wagens in Abhängigkeit von den Bewegungen des Oberkörpers und/oder der unteren Gliedmaßen der Bedienungsperson und/oder in Abhängigkeit von einem vorbestimmten Bewegungssollwert aufweist, und dadurch, dass sie Stützmittel der Bedienungsperson, die einen Befestigungsgurt aufweisen, der geeignet ist, mindestens einen Teil des Oberkörpers der Bedienungsperson, vorzugsweise einen Teil des Beckens und/oder des Beckengürtels der Bedienungsperson einzuschließen, und Befestigungsmittel des Befestigungsgurts am Fahrgestell des motorisierten Wagens aufweist.

2. Vorrichtung zur Unterstützung nach Anspruch 1, **dadurch gekennzeichnet, dass** sie aufweist
- mindestens einen Sensor zum Messen der Position und/oder der Verschiebung eines Teils des Rumpfes der Bedienungsperson, beispielsweise des Oberkörpers, des Beckens oder einer Schulter oder eines Bereichs der unteren Gliedmaßen der Bedienungsperson,
- einen Echtzeitcontroller, der in dem motorisierten Wagen eingebaut ist, der geeignet ist, die Bewegung des motorisierten Wagens als Antwort auf eine Bewegung der Bedienungsperson ausgehend von den durchgeführten Messungen zu steuern, die von dem Sensor zum Messen der Position und/oder der Verschiebung eines Teils des Rumpfes der Bedienungsperson oder eines Bereichs der unteren Gliedmaßen der Bedienungsperson bereitgestellt werden.

3. Vorrichtung zur Unterstützung nach Anspruch 2, **dadurch gekennzeichnet, dass** der Sensor zum Messen zur Gruppe gehört, die mindestens aufweist:
- Gyroskop mit drei Rotationsfreiheitsgraden,
- Kraftsensor,
- optische Messvorrichtung.

4. Vorrichtung zur Unterstützung nach einem der Ansprüche 2 und 3, **dadurch gekennzeichnet, dass** der Sensor zum Messen ein Sensor ist, der ermöglicht, eine Bewegung von mindestens einem Fuß der Bedienungsperson zu erfassen, und der eingebaute Echtzeitcontroller geeignet ist, das Drehen von mindestens einem Antriebsrad des motorisierten Wagens derart zu steuern, dass sich der Wagen am Boden bewegt, indem er der Bewegung der Bedienungsperson folgt.

5. Vorrichtung zur Unterstützung nach einem der Ansprüche 1 bis 4, **dadurch gekennzeichnet, dass** die Befestigungsmittel ein erstes Kabel, das mit einem ersten Abschnitt des Befestigungsgurts fest verbunden ist, und ein zweites Kabel aufweisen, das mit einem zweiten Abschnitt des Befestigungsgurts fest verbunden ist, der von dem ersten Abschnitt verschieden ist.

6. Vorrichtung zur Unterstützung nach Anspruch 5, **dadurch gekennzeichnet, dass** sie Mittel zum unabhängigen Betätigen von jedem der Kabel aufweist.

7. Vorrichtung zur Unterstützung nach Anspruch 6, **dadurch gekennzeichnet, dass** sie Mittel zum Überwachen der Körperhaltung der Bedienungsperson aufweist, die geeignet sind, zu erfassen, wenn die Körperhaltung der Bedienungsperson von einer vordefinierten Referenzkörperhaltung abweicht, und Mittel zum Steuern der Mittel zum Betätigen der Kabel in Abhängigkeit von der Abweichung der erfassten Körperhaltung von der vordefinierten Referenzkörperhaltung.

8. Vorrichtung nach einem der Ansprüche 1 bis 9, **dadurch gekennzeichnet, dass** die Stützmittel eine Stützvorrichtung eines Arms der Bedienungsperson aufweisen.

9. Vorrichtung zur Unterstützung nach einem der Ansprüche 1 bis 8, **dadurch gekennzeichnet, dass** sie Mittel zum Bestimmen der Schraubekomponenten der Wechselwirkungskräfte zwischen der Bedienungsperson und dem Werkzeug und kinematische Regelmittel des Handhabungsarms und/oder des motorisierten Wagens aufweist, die dazu bestimmte, die Schraube der Wechselwirkungskräfte zwischen der Bedienungsperson und dem Werkzeug zu minimieren.

10. Vorrichtung zur Unterstützung nach Anspruch 9, **dadurch gekennzeichnet, dass** die Mittel zum Bestimmen der Schraubekomponenten der Wechselwirkungskräfte zwischen der Bedienungsperson und dem Werkzeug Mittel zum Messen von mindestens einer Komponente des Moments der Kräfte und/oder der Resultierenden der Kräfte aufweisen, die auf mindestens ein Gelenk des Handhabungsarms und/oder auf einen Haltegriff, der an dem Arm befestigt ist, ausgeübt werden.

11. Vorrichtung zur Unterstützung nach einem der Ansprüche 9 und 10, **dadurch gekennzeichnet, dass** der Handhabungsarm einen ersten und einen zweiten Abschnitt, die über ein erstes Gelenk fest verbunden sind, und einen dritten Abschnitt aufweist, der über ein zweites Gelenk mit dem zweiten Abschnitt fest verbunden ist, wobei der erste Abschnitt ferner durch ein drittes Gelenk mit dem Fahrgestell des motorisierten Wagens fest verbunden ist, wobei jedes des ersten, zweiten und dritten Gelenks durch die Regelmittel gesteuert wird.

12. Vorrichtung zur Unterstützung nach einem der Ansprüche 9 bis 11, **dadurch gekennzeichnet, dass** die Regelmittel geeignet sind, die Position des Handhabungsarms und/oder die Position des motorisierten Wagens in Bezug auf die Position des Werkzeugs oder des distalen Endes des Handhabungsarms zu steuern.

## Claims

1. A device for assisting an operator in the handling of a tool, comprising a robotic handling arm of said tool mounted on a motor-driven cart, said device comprising means for automatically controlling the movement of said motor-driven cart according to the movements of the trunk and/or the lower limbs of the operator and/or according to a predetermined movement instruction and in that it has means for supporting said operator comprising a harness capable of holding at least a portion of the trunk of said operator, preferably a portion of the pelvis and/or pelvic belt of said operator, and means for securing said harness to the frame of said motor-driven cart.

2. The assistance device according to claim 1, **characterised in that** it comprises :
- at least one sensor for measuring the position and/or displacement of a portion of the operator's trunk, for example of the bust, pelvis or shoulder, or a portion of the operator's lower limbs,
- a real-time controller embedded on said motor-driven cart, capable of controlling the movement of said motor-driven cart in response to a movement of said operator from the measurements provided by said position and/or displacement sensor of a portion of the trunk or a portion of the operator's lower limbs.

3. The assistance device according to claim 2, **characterised in that** said measurement sensor belongs to the group consisting of at least:
- a gyroscope with three degrees of freedom of rotation;
- a force sensor;
- an optical measuring device.

4. The assistance device according to any of claims 2 and 3, **characterised in that** said measurement sensor is a sensor for detecting a movement of at least one foot of said operator and said on-board real-time controller is able to control the rotation of at least one drive wheel of said motor-driven cart, so that said cart moves on the ground following the movement of said operator.

5. The assistance device according to any of the claims 1 to 4, **characterised in that** said securing means comprises a first cable secured to a first portion of said harness and a second cable secured to a second portion of said harness, distinct from said first portion.

6. The assistance device according to claim 5, **characterised in that** it comprises means for operating each of said cables independently.

7. The assistance device according to claim 6, **characterised in that** it comprises means for monitoring the posture of said operator capable of detecting when said posture of said operator deviates from a predefined reference posture and means for controlling said means for actuating said cables based on the deviation of said detected posture from said predefined reference posture.

8. The assistance device according to any of claims 1 to 9, **characterised in that** said supporting means comprises a device for supporting one arm of said operator.

9. The assistance device according to any of the claims 1 to 8, **characterised in that** it comprises means for determining the components of the torsor of the interaction forces between said operator and said tool and kinematic servoing means of said handling arm and/or said motor-driven cart intended to minimise the torsor of the interaction forces between said operator and said tool.

10. The assistance device according to claim 9, **characterised in that** said means for determining the components of the torsor of the interaction forces between said operator and said tool comprise means for measuring at least one component of the moment of the forces and/or the resultant of the forces acting on at least one articulation of said handling arm and/or on a gripping handle fixed to said arm.

11. The assistance device according to any of the claims 9 and 10, **characterised in that** said handling arm comprises first and second sections secured via a first joint and a third section secured to said second section via a second joint, said first section being further secured to the frame of said motor-driven cart by a third joint, each of said first, second and third joints being controlled by said servoing means.

12. The assistance device according to any of the claims 9 to 11, **characterised in that** said servoing means are able to control the position of the handling arm and/or the position of the motor-driven cart with respect to the position of said tool or the distal end of the handling arm.
